# EUROPEAN PATENT APPLICATION

(11) **EP 2 784 693 A1**
(43) Date of publication of application: **01.10.2014**
(21) Application number: 12852076.4
(22) Date of filing: 12.10.2012
(51) Int. Cl.: G06F 17/28, G06F 3/16, G06F 17/27

(54) **TRANSLATION DEVICE, TRANSLATION SYSTEM, TRANSLATION METHOD AND PROGRAM**

(30) Priority: 22.11.2011 JP 2011254851
(71) Applicant: NEC CASIO Mobile Communications, Ltd., Kawasaki-shi Kanagawa 211-8666 (JP)
(72) Inventor: ITAMOTO, Shinichi, Kanagawa 211-8666 (JP)
(74) Representative: Vossius & Partner
(86) International application number: PCT/JP2012/076479
(87) International publication number: WO 2013/077110

(57) **Abstract**

A translation device includes input and output units and identifies, for each of them, a communication type utilized in the relevant input and output unit. When any one of the input and output units has obtained a message, the communication type identified for this input and output unit is detected, and the message is translated from one having the detected communication type into one having another identified communication type. The translated message is output to the input and output unit associated with the other identified communication type.

## Description

### TECHNICAL FIELD

The present invention relates to a translation device, a translation system, and a translation method and program.

Priority is claimed on Japanese Patent Application No. 2011-254851, filed November 22, 2011, the contents of which are incorporated herein by reference.

### BACKGROUND ART

Devices or systems that perform translation have been proposed so that persons who use different languages can communicate with each other.

For example, in a video phone exchange system disclosed in Patent Document 1, under a condition that an automatic translation switch of a video phone has been pushed, a speech signal from the video phone is transmitted via the switch to a video phone of the other end of the line and also to a speech-to-text conversion module. The speech-to-text conversion module generates text (or character) data from the speech signal and transmits the data to a text language translation module. The text language translation module has a function of performing language conversion between two predetermined nations. For example, text data in English is translated into Japanese and translated text data is transmitted via the switch to an image and text synthesis module. The image and text synthesis module synthesizes the translated text data (received from the text language translation module) with an image signal sent from the video phone and transmits the synthesized result to the video phone so that the translated text data is displayed as a caption in a lower part of the image.

According to the above control, in the video phone of the other end, a user can see the translated caption together with the image while listening to speech. Therefore, it is possible to perform phone communication with a person who uses a different language while able to sense intonation or delicate nuance.

### PRIOR ART DOCUMENT

### Patent Document

Patent Document 1: Japanese Unexamined Patent Application, First Publication No. H05-260193.

### DISCLOSURE OF INVENTION

### Problem to be Solved by the Invention

If the devices or systems that perform translation can translate a message classified into one of various communication types such as languages used by the individual speakers, it is convenient for users of the devices or systems. For example, if the video phone exchange system disclosed in Patent Document 1 can translate various languages according to the language used by each caller, the convenience of the video phone exchange system is further improved.

An object of the present invention is to provide a translation device, a translation system, and a translation method to solve the above-described problem.

### Means for Solving the Problem

In order to solve the above problem, the present invention provides a translation device comprising:
a plurality of input and output units;
a communication type identifying unit that identifies, for each of the input and output units, a communication type utilized in the relevant input and output unit;
an input communication type detection unit wherein when any one of the input and output units has obtained a message, the input communication type detection unit detects the communication type identified for this input and output unit by the communication type identifying unit; and
a translation unit that translates the message from one having the communication type detected by the input communication type detection unit into one having at least one other communication type identified by the communication type identifying unit and outputs the translated message to the input and output unit associated with said at least one other communication type.

The present invention also provides a translation system comprising a translation device and a terminal device, wherein:
the terminal device comprises:
   an input unit that obtains a message;
   a communication unit that sends the message obtained by the input unit to the translation device and receives a translated message sent from the translation device; and
   an output unit that outputs the translated message received by the communication unit,
   wherein the input unit and the output unit form an input and output unit;
the translation device comprises:
   a communication unit that communicates with the terminal device;
   a plurality of input and output units;
   a communication type identifying unit that identifies, for each currently effective unit among the input and output units of the translation device and the terminal device, a communication type utilized in the relevant input and output unit;
   an input communication type detection unit wherein when any one of the currently effective input and output units has obtained a message, the input communication type detection unit detects the communication type identified for this input and output unit by the communication type identifying unit; and
   a translation unit that translates the message from one having the communication type detected by the input communication type detection unit into one having at least one other communication type identified by the communication type identifying unit and outputs the translated message to the input and output unit associated with said at least one other communication type.

The present invention also provides a translation method utilized in a translation device that has a plurality of input and output units, the method comprising:
a communication type identifying step that identifies, for each of the input and output units, a communication type utilized in the relevant input and output unit;
an input communication type detection step wherein when any one of the input and output units has obtained a message, the input communication type detection step detects the communication type identified for this input and output unit by the communication type identifying step; and
a translation step that translates the message from one having the communication type detected by the input communication type detection step into one having at least one other communication type identified by the communication type identifying step and outputs the translated message to the input and output unit associated with said at least one other communication type.

The present invention also provides a program that makes a computer as a translation device, that has a plurality of input and output units, execute:
a communication type identifying step that identifies, for each of the input and output units, a communication type utilized in the relevant input and output unit;
an input communication type detection step wherein when any one of the input and output units has obtained a message, the input communication type detection step detects the communication type identified for this input and output unit by the communication type identifying step; and
a translation step that translates the message from one having the communication type detected by the input communication type detection step into one having at least one other communication type identified by the communication type identifying step and outputs the translated message to the input and output unit associated with said at least one other communication type.

### Effect of the Invention

In accordance with the present invention, it is possible to translate messages having various communication types in accordance with a communication type currently utilized by a caller.

### BRIEF DESCRIPTION OF THE DRAWINGS

Fig. 1 is a general block diagram that shows a functional structure of a translation device as a first embodiment of the present invention.
Fig. 2 is a general block diagram that shows a more detailed functional structure of the translation device in the embodiment.
Fig. 3 is a diagram utilized to explain a variation in the form of the translation device in the embodiment.
Fig. 4 is a diagram utilized to explain a usage example of the translation device in the embodiment.
Fig. 5 is a diagram utilized to explain an example of a language selection picture displayed by the translation device of the embodiment.
Fig. 6 is a flowchart showing the procedure of the translation operation performed by the translation device of the embodiment.
Fig. 7 is a perspective view that shows an example of the form of the translation device of the embodiment in which two input and output units are provided on the front and back sides of a body.
Fig. 8 is a diagram showing the general structure of a translation system as a second embodiment of the present invention.
Fig. 9 is a general block diagram showing the functional structure of a terminal device in the embodiment.
Fig. 10 is a general block diagram showing the functional structure of a translation device in the embodiment.

### MODE FOR CARRYING OUT THE INVENTION

### First embodiment

Below, embodiments of the present invention will be explained with reference to the drawings.

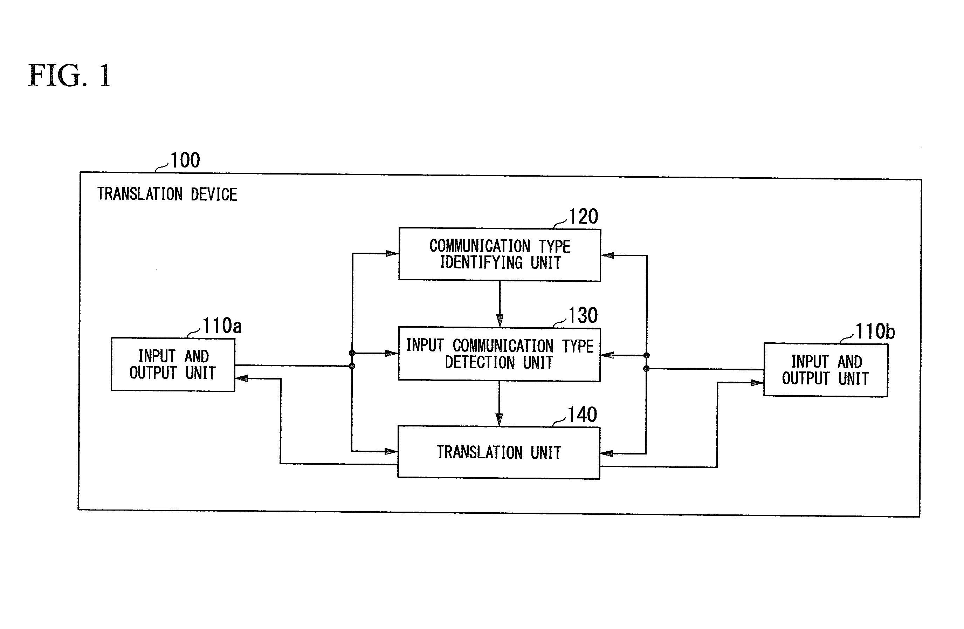

Fig. 1 is a general block diagram that shows a functional structure of a translation device as an embodiment of the present invention. In Fig. 1, the translation device 100 has input and output units 110a and 110b, a communication type identifying unit 120, an (input) communication type detection unit 130, and a translation unit 140.

The input and output units 110a and 110b each (i) receive a message from a person (called a "user" here) who performs message communication utilizing the translation device 100 or (ii) output a message to the user.

The "message" here is information issued from a person to another person. For example, the message may be spoken words, words written in characters, or words in sign language.

Below, the input and output units 110a and 110b are generally called "input and output units 110".

For each of the input and output units 110, the communication type identifying unit 120 identifies a communication type utilized in the relevant input and output unit 110.

The "communication type" here denotes a type of means for transmitting each message. The communication type may be a specific language (i.e., type of language) or, in more detail, speech in a specific language (e.g., Japanese or English speech), a description utilizing characters of a specific language (e.g., a description in Japanese or English), or sign language.

For the communication type, further subdivided communication types may be utilized such as dialect speech in a specific language or speech in a specific language utilizing a polite form of speech.

When any of the input and output units 110 has obtained a message (i.e., received an input message), the communication type detection unit 130 detects the communication type identified by the communication type identifying unit 120 for the input and output unit 110 which has obtained the message.

Additionally, when any of the input and output units 110 has obtained a message, the translation unit 140 translates the message from one having the communication type (detected by the communication type detection unit 130 for the relevant input and output unit 110) to one having another communication type identified by the communication type identifying unit 120. Said "another communication type" may be each communication type (other than the detected communication type) identified by the communication type identifying unit 120 for each input and output unit 110, or the communication type identified by the communication type identifying unit 120 for each input and output unit 110 other than the input and output unit 110 which has obtained the message.

The translation unit 140 outputs the translated message to an input and output unit 110 where the communication type of the translated message coincides with the communication type identified by the communication type identifying unit 120.

The "translation" here means conversion between the communication types utilized to represent a message, that is, conversion from a message represented utilizing a specific communication type to a message utilizing another communication type.

As described above, the communication type identifying unit 120 identifies the communication type utilized in each input and output unit 110. When any of the input and output units 110 has obtained a message, the communication type detection unit 130 detects the communication type utilized in the input and output unit 110 which has obtained the message. Therefore, based on the communication type detected by the communication type detection unit 130, the translation unit 140 may convert communication type of the message from the communication type detected by the communication type detection unit 130 to the communication type identified by the communication type identifying unit 120 for another input and output unit 110. Accordingly, the translation device 100 can translate messages having various communication types based on the communication type currently utilized by the user (caller).

Below, the communication type identified by the communication type identifying unit 120 for an input and output unit 110 is called the "communication type of the input and output unit 110".

In addition, the input and output unit 110 that has obtained a message is called a "(translation) source input and output unit 110", and the communication type of the source input and output unit 110 is called a "(translation) source communication type".

Furthermore, each input and output unit 110 other than the source input and output unit 110 is called a "(translation) destination input and output unit 110", and the communication type of the destination input and output unit 110 is called a "translated communication type".

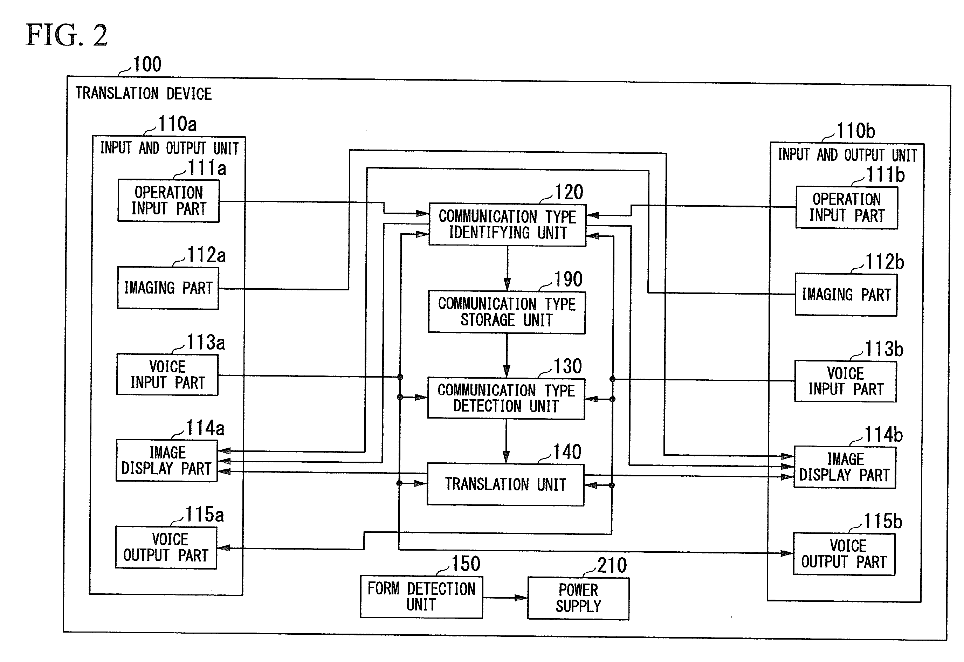

Next, the structure of the translation device will be explained in more detail with reference to Fig. 2.

Fig. 2 is a general block diagram that shows a more specific example of the functional structure of the translation device 100 shown in Fig. 1.

In Fig. 2, the translation device 100 has an input and output units 110a (first input and output unit), an input and output unit 110b (second input and output unit), a communication type identifying unit 120, a communication type detection unit 130, a translation unit 140, a form detection unit 150, a communication type storage unit 190, and a power supply 210.

The input and output unit 110a includes an operation input part 111 a, an imaging part 112a, a voice input part 113a, an image display part 114a, and a voice output part 115a.

The input and output unit 110b includes an operation input part 111b, an imaging part 112b, a voice input part 113b, an image display part 114b, and a voice output part 115b.

Below, the operation input parts 111a and 111b may be generally called "operation input parts 111"; the imaging parts 112a and 112b may be generally called "imaging parts 112"; the voice input parts 113a and 113b may be generally called "voice input parts 113"; the image display parts 114a and 114b may be generally called "image display parts 114"; and the voice output parts 115a and 115b may be generally called "voice output parts 115".

In the input and output unit 110a, the imaging part 112a has a camera to perform imaging and outputs an obtained image to the image display part 114b. In particular, the imaging part 112a continuously performs the imaging of a user (i.e., to obtain video) and outputs the obtained image as image data to the pulse width modulator 114b.

The voice input part 113a has a microphone to collect peripheral sounds. In particular, the voice input part 113a acquires the speech (as a message) of the user, that is, speech spoken by the user. The voice input part 113a outputs the collected peripheral sounds as voice data to the communication type identifying unit 120, the communication type detection unit 130, and the translation unit 140.

The image display part 114a has a display screen such as a liquid display or an organic electro-luminescence display and displays various types of images such as video or static images or text (characters). In particular, the image display part 114a displays a translated message as text. More specifically, the image display part 114a synthesizes an image of a user (as the communication partner), which is output from the input and output unit 110b, with a translated message (translated by the translation unit 140) as text and displays the synthesized result.

The operation input part 111a may have a touch panel (or touch sensor) provided in the display screen of the image display part 114a so as to accept an input operation of the user. The operation input part 111a outputs information, that indicates the accepted input operation, to the communication type identifying unit 120. In particular, the operation input part 111a accepts an operation of selecting the communication type, as explained later.

The voice output part 115a has a speaker to output voice.

The input and output unit 110b has parts similar to those of the input and output unit 110a. The imaging part 112b has a camera to perform imaging and outputs an obtained image to the image display part 114a. In particular, the imaging part 112b continuously performs the imaging of a user (i.e., to obtain video) and outputs the obtained image as image data to the pulse width modulator 114a.

The voice input part 113b has a microphone to collect peripheral sounds. In particular, the voice input part 113b acquires the speech (as a message) of the user, that is, speech spoken by the user. The voice input part 113b outputs the collected peripheral sounds as voice data to the communication type identifying unit 120, the communication type detection unit 130, and the translation unit 140.

The image display part 114b has a display screen such as a liquid display or an organic electro-luminescence display and displays various types of images such as video or static images or text (characters). In particular, the image display part 114b displays a translated message as text. More specifically, the image display part 114b synthesizes an image of a user (as the communication partner), which is output from the input and output unit 110a, with a translated message (translated by the translation unit 140) as text and displays the synthesized result.

The operation input part 111b may have a touch panel (or touch sensor) provided in the display screen of the image display part 114b so as to accept an input operation of the user. The operation input part 111b outputs information, that indicates the accepted input operation, to the communication type identifying unit 120. In particular, the operation input part 111b accepts an operation of selecting the communication type, as explained later.

The voice output part 115b has a speaker to output voice.

In addition, each of the input and output units 110 outputs a translated message (translated by the translation unit 140) in a manner that can prevent interference with a signal output from the other input and output unit 110.

Specifically, The individual input and output units 110 output each translated message (translated by the translation unit 140) in directions that differ from each other (to achieve directionality), and thereby interference with a signal output from the other input and output unit 110 can be prevented.

More specifically, the circuit board 100 can have a predetermined form such that a surface on which the input and output unit 110a is arranged and another surface on which the input and output unit 110b is arranged do not face each other and are directed in different directions, so that the input and output units 110a and 100b in the predetermined form have directionality by which signals therefrom do not interfere with each other.

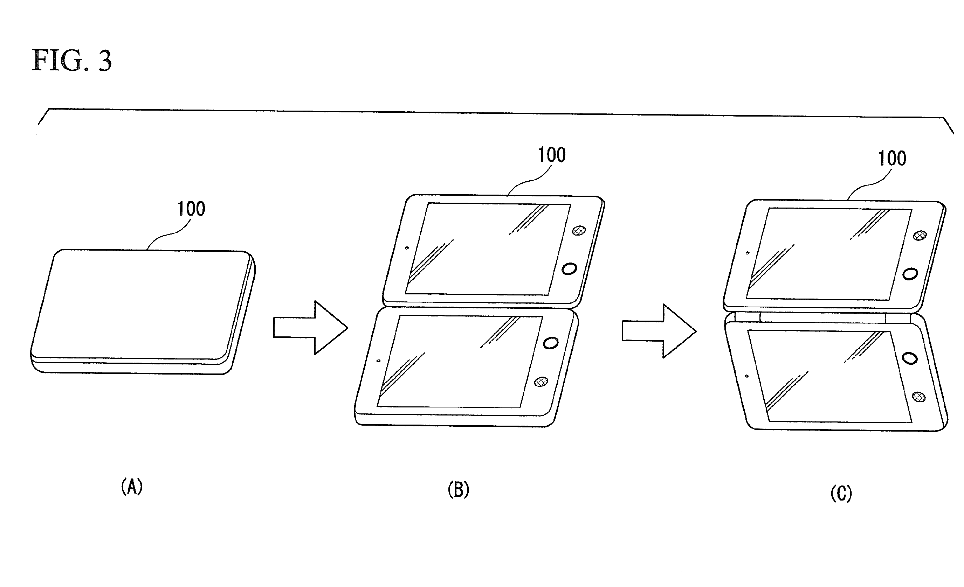

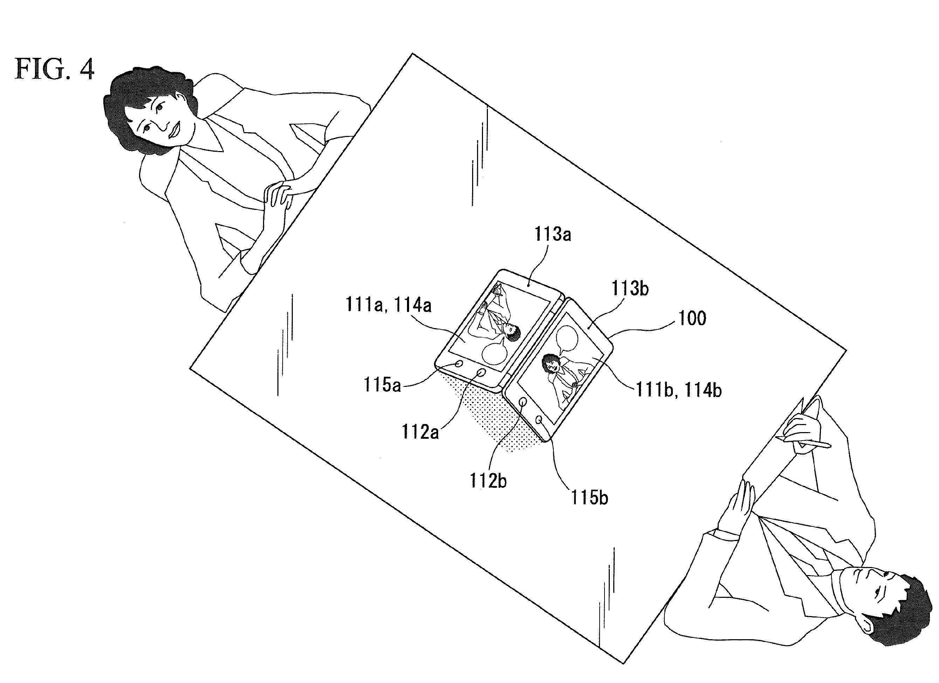

The form of the translation device 100 will be explained with reference to Figs. 3 and 4.

Fig. 3 is a diagram utilized to explain a variation in the form of the translation device 100. As shown in Fig. 3, the translation device 100 has two bodies that are combined in a foldable manner. The form of the translation device 100 can vary from a closed form of the two bodies to an expanded form by 180 degrees or greater. In Fig. 3, part (A) indicates a form of the translation device 100 when the two bodies are closed, part (B) indicates a form of the translation device 100 when the two bodies are expanded by 180 degrees, and part (C) indicates a form of the translation device 100 when the two bodies are further expanded from the 180-degree open form.

Below, the closed form of the two bodies (shown in the part (A)) is called a "closed form", and the further open form (shown in the part (C)) than the 180-degree open form is called an "open form". This open form is an example of the above-described predetermined form.

Fig. 4 is a diagram utilized to explain a usage example of the translation device 100.

As shown in Fig. 4, the translation device 100 can be used in the open form. In this form, the translation device 100 can be stably set up on a surface of a desk or the like, where the combined part between the two bodies is arranged upside of the form. Therefore, the user can easily set up the translation device 100 without no specific support or the like.

Again as shown in Fig. 4, in the translation device 100 each functional part of the input and output unit 110a is arranged on one of the two surfaces that face outside in the further open form (of the two bodies) than the 180-degree open form (i.e., the two surfaces that face each other when the two bodies are closed (as shown in part (A) of Fig. 3)). Additionally, each functional part of the input and output unit 110b is arranged on the other of the above two surfaces.

Specifically, in the translation device 100, (i) a touch panel consisting of a display screen of the image display part 114a and a touch sensor of the operation input part 111a; a camera lens of the imaging part 112a, and a microphone of the voice input part 113a; and a speaker of the voice output part 115a are arranged on one of the above-described surfaces, and (ii) a touch panel consisting of a display screen of the image display part 114b and a touch sensor of the operation input part 111b; a camera lens of the imaging part 112b, and a microphone of the voice input part 113b; and a speaker of the voice output part 115b are arranged on the other surface.

Again as shown in Fig. 4, the image display part 114a synthesizes an image of a user (as the communication partner), which is output from the input and output unit 110b, with a translated message (translated by the translation unit 140) as a text in a balloon and displays the synthesized result. Similarly, the image display part 114b synthesizes an image of a user (as the communication partner), which is output from the input and output unit 110a, with a translated message (translated by the translation unit 140) as a text in a balloon and displays the synthesized result.

Here, the individual input and output units 110 display each message (translated and output by the translation unit 140) on different display screens (of the image display parts of the corresponding input and output units 110) so that interference between the input and output units 110 can be prevented. In particular, as shown in Fig. 4, only one display screen is visible to each user in the open form. Therefore, each user can easily find the display screen assigned to the user.

As described later, when the input and output units 100 each output a translated message as voice (by means of the voice output parts 115a and 115b), the open form has a form in which the surface on which the input and output unit 110a is arranged and the surface on which the input and output unit 110b is arranged do not face each other and are directed in different directions, so that the voice output parts 115a and 115b can output voice in different directions from each other. Therefore, when the voice output parts 115a and 115b each have a parametric speaker having strong directionality to output voice, interference between signals output from the voice output parts can be prevented.

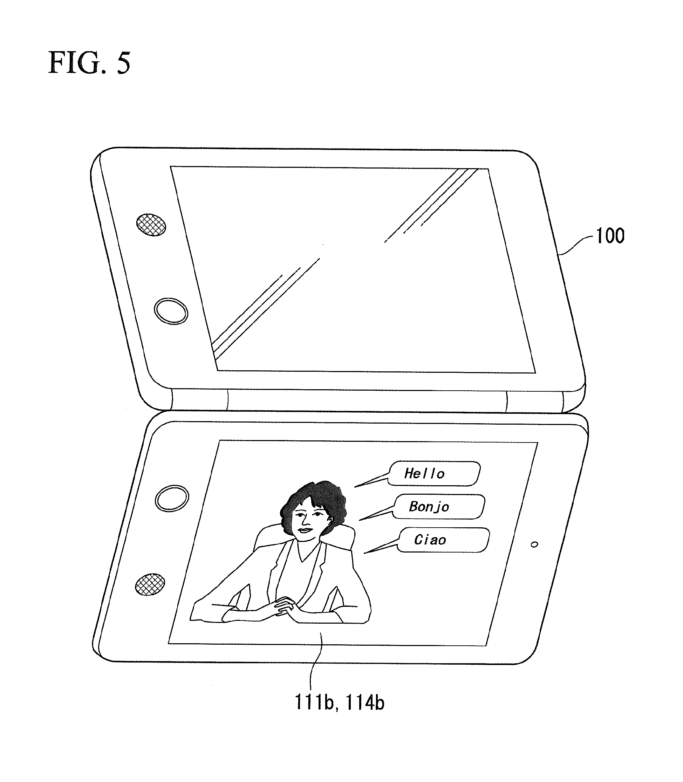

The communication type identifying unit 120 identifies a communication type utilized in each of the input and output units 110. The communication type identification performed by the communication type identifying unit 120 will be explained with reference to Fig. 5.

Fig. 5 is a diagram utilized to explain an example of a language selection picture displayed by the translation device 100.

In Fig. 5, the image display part 114b shows a plurality of languages in individual balloons as candidates for the communication type. If the operation input part 111b detects an operation of touching any balloon, the communication type identifying unit 120 identifies the language assigned to the touched balloon as the communication type of the input and output unit 110b.

Here, the translation device 100 is preset to obtain a message spoken by the user and display a translated message as a text. Therefore, after the communication type identifying unit 120 identified a language as the communication type of the input and output unit 110b, the message having the communication type accepted by the input and output unit 110b is limited to one spoken in the relevant language, and the communication type of a message output from the input and output unit 110b is limited to display of the text of a message in the relevant language.

Accordingly, the user can designate the communication type utilized by the user by a simple operation such as touching any balloon on the display screen.

The communication type storage unit 190 stores the communication type identified by the communication type identifying unit 120.

When any of the input and output units 110 has obtained a message, the communication type detection unit 130 detects the communication type (identified by the communication type identifying unit 120 for the input and output unit 110 which has obtained the message) by retrieving the communication type from the communication type storage unit 190.

Additionally, when any of the input and output units 110 has obtained a message, the translation unit 140 translates the message from one having the communication type (detected by the communication type detection unit 130 for the relevant input and output unit 110) to one having another communication type identified by the communication type identifying unit 120. The translation unit 140 outputs the translated message to the input and output unit 110 where the communication type of the translated message coincides with the communication type identified by the communication type identifying unit 120.

For example, if the communication type identifying unit 120 identifies Japanese as the communication type of the input and output unit 110a and identifies English as the communication type of the input and output unit 110b, the communication type storage unit 190 stores each communication type associated with the corresponding input and output unit 110.

After that, when the voice input part 113a has obtained a spoken message, the communication type detection unit 130 retrieves "Japanese" as the communication type of the input and output unit 110a (i.e., information which indicates that the communication type of the input and output unit 110a is Japanese: the same applies hereafter) from the communication type storage unit 190. The communication type detection unit 130 outputs the retrieved information as the communication type of the source input and output unit to the translation unit 140.

The communication type detection unit 130 also retrieves the communication type of the other input and output unit, that is, "English" as the communication type of the input and output unit 110b from the communication type storage unit 190 and outputs the retrieved information as the communication type of the destination input and output unit to the translation unit 140 while associating the communication type with information utilized to identify the relevant input and output unit 110b (i.e., identification information).

Then the translation unit 140 translates the language of the message obtained by the voice input part 113a from Japanese, that is the communication type of the source (input and output unit 110a) to English, that is the communication type of the destination (input and output unit 110b) that receives the message. The translation unit 140 outputs the translated message as a text to the input and output unit 110b as the destination input and output unit.

The input and output unit 110b (specifically, the image display part 114b), which receives the translated message as a text, displays the text in a balloon by synthesizing the text with an image of the user (i.e., speaker) obtained by the imaging part 112a (see Fig. 4).

On the other hand, when the voice input part 113b has obtained a spoken message, the communication type detection unit 130 retrieves "English" as the communication type of the input and output unit 110b from the communication type storage unit 190 and outputs the retrieved information as the communication type of the source input and output unit to the translation unit 140.

The communication type detection unit 130 also retrieves the communication type of the other input and output unit, that is, "Japanese" as the communication type of the input and output unit 110a from the communication type storage unit 190 and outputs the retrieved information as the communication type of the destination input and output unit to the translation unit 140 while associating the communication type with identification information of the relevant input and output unit 110a.

Then the translation unit 140 translates the language of the message obtained by the voice input part 113b from English, that is the communication type of the source (input and output unit 110b) to Japanese, that is the communication type of the destination (input and output unit 110a) that receives the message. The translation unit 140 outputs the translated message as a text to the input and output unit 110a as the destination input and output unit.

The input and output unit 110a (specifically, the image display part 114a), which receives the translated message as a text, displays the text in a balloon by synthesizing the text with an image of the user (i.e., speaker) obtained by the imaging part 112b (see Fig. 4).

As described above, since the communication type identifying unit 120 identifies one communication type for each input and output unit 110 (more specifically, common communication type utilized when the input and output unit 110 functions as the source and when it functions as the destination), the translation unit 140 can perform bidirectional translation (i.e., from the input and output unit 110a to 110b and from the input and output unit 110b to 110a).

The form detection unit 150 detects the open form as the predetermined form of the translation device 100 (as shown in part (C) of Fig. 3), which can prevent interference between the individual input and output units 110. For example, the form detection unit 150 has a switch that is turned on (i.e., connected) when the translation device 100 is in the open form, otherwise, the switch is turned off (i.e., released) so that whether or not the translation device 100 is in the open form is determined by determining whether or not the switch is on.

When the form detection unit 150 detects the open form of the translation device 100, the power supply 210 supplies (electric) power to each unit of the translation device 100 to activate the translation device 100.

Here, as shown in Fig. 3, the translation device 100 has a variable form. When carrying the translation device 100, the user can set the translation device 100 to the closed form (as shown in part (A) of Fig. 3) so that the user can carry the translation device 100 in a compact form, which can simultaneously prevent the display screen, the camera, or the like, from being broken. In contrast, when using the translation device 100, the user sets the translation device 100 to the open form as shown in Fig. 4.

Accordingly, the form detection unit 150 detects the open form, and the translation device 100 is activated by supplying power from the power supply 210 to each unit of the translation device 100. Therefore, when using the translation device 100, the user can activate the translation device 100 by setting the translation device 100 to the open form, so that the user can more quickly start operating the translation device 100.

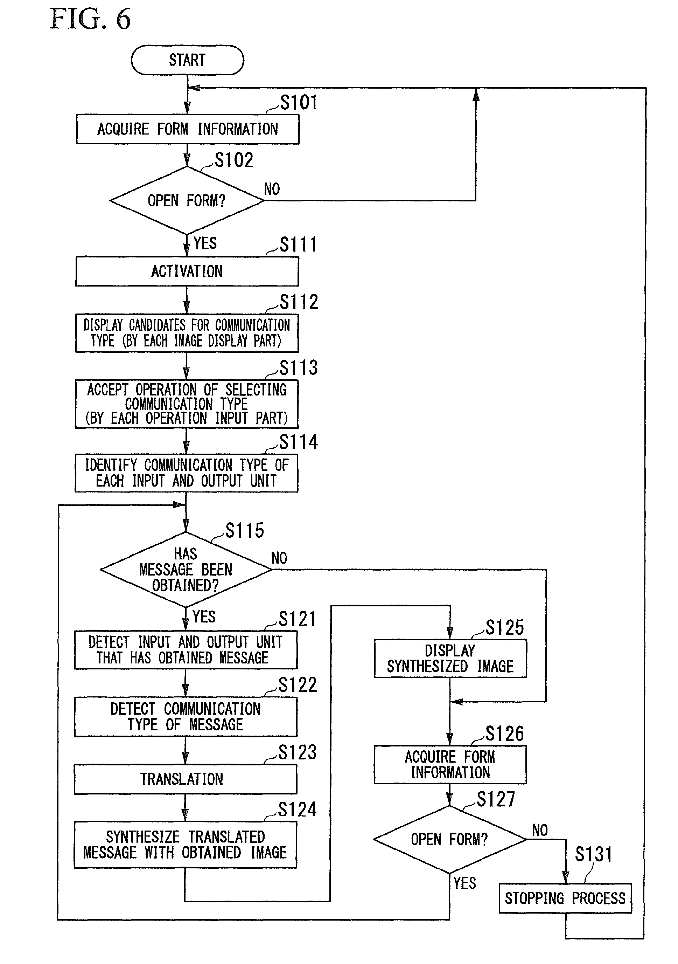

Next, the operation of the translation device 100 will be explained with reference to Fig. 6.

Fig. 6 is a flowchart showing the procedure of the translation operation performed by the translation device 100. The procedure starts while the translation device 100 is inactive, and first the form detection unit 150 acquires form information (e.g., on/off information of the switch which is on when the translation device 100 is in the open form) that indicates whether or not the translation device 100 is in the open form (see step S101).

Based on the acquired information, the form detection unit 150 determines whether or not the translation device 100 is in the open form (see step S102).

If it is determined that the translation device 100 is not in the open form (i.e., "NO" in step S102), the operation returns to step S101.

In contrast, if it is determined that the translation device 100 is in the open form (i.e., "YES" in step S102), the form detection unit 150 makes the power supply 210 to supply power to each unit of the translation device 100 so as to activate the translation device 100 (see step S111).

When the activation of the translation device 100 has completed, the communication type identifying unit 120 outputs an instruction to each of the image display parts 114a and 114b so as to display candidates for the communication type, so that the image display parts 114a and 114b each display the candidates for the communication type (see step S112).

For example, the communication type identifying unit 120 outputs image data of the language selection picture as shown in Fig. 5, as the instruction to display the candidates for the communication type, to the image display parts 114a and 114b. Then the image display parts 114a and 114b each display the language selection picture based on the image data output from the communication type identifying unit 120.

The operation input parts 111a and 111b then each accept an operation of selecting the communication type and outputs information that indicates the accepted operation to the communication type identifying unit 120 (see step S113).

For example, if the operation input part 111a accepts a touching operation by the user onto the display screen while the image display part 114a displays the language selection picture, then the operation input part 111a outputs information, that indicates a touch position (touched by the user) on the display screen, to the communication type identifying unit 120. Similarly, if the operation input part 111b accepts a touching operation by the user onto the display screen while the image display part 114b displays the language selection picture, then the operation input part 111b outputs information, that indicates the touch position on the display screen, to the communication type identifying unit 120.

Next, based on the information that indicates the operation accepted by the operation input part 111a, the communication type identifying unit 120 identifies the communication type of the input and output unit 110a. Similarly, based on the information that indicates the operation accepted by the operation input part 111b, the communication type identifying unit 120 identifies the communication type of the input and output unit 110b. The communication type identifying unit 120 stores each identified communication type in the communication type storage unit 190 in a manner such that the communication type is associated with the identification information of the corresponding input and output unit 110 (see step S114).

For example, if the communication type identifying unit 120 receives information that indicates the touch position from the operation input part 111a while the image display part 114a displays the language selection picture, then the communication type identifying unit 120 determines, based on the information that indicates the touch position, which of the balloons shown in the language selection picture has been touched and identifies the language shown in the determined balloon as the communication type of the input and output unit 110a.

Similarly, if the communication type identifying unit 120 receives information that indicates the touch position from the operation input part 111b while the image display part 114b displays the language selection picture, then the communication type identifying unit 120 determines, based on the information that indicates the touch position, which of the balloons shown in the language selection picture has been touched and identifies the language shown in the determined balloon as the communication type of the input and output unit 110b.

Next, the communication type detection unit 130 determines whether or not the voice input part 113a or 113b has obtained a user's speech as a message (see step S115).

If it is determined that it has been obtained (i.e., "YES" in step S115), the communication type detection unit 130 detects the input and output unit 110 that has obtained the message (see step S121). Specifically, the communication type detection unit 130 determines which of the voice input parts 113a and 113b has obtained the message.

The communication type detection unit 130 then detects the communication type of the input and output unit 110 that has obtained the message and outputs the detected result as the communication type of the translation source to the translation unit 140 in a manner such that the relevant communication type is associated with the identification information of the corresponding input and output unit 110. The communication type detection unit 130 also retrieves the communication type of the other input and output unit 110 (as the communication type of the translation destination) and the identification information of this corresponding input and output unit 110 from the communication type storage unit 190 and outputs the retrieved result to the translation unit 140 (see step S122).

For example, if it is determined in step S121 that the operation input part 111a (specifically, the voice input part 113a) has obtained a message, the communication type detection unit 130 retrieves the communication type of the input and output unit 110a from the communication type storage unit 190 and outputs the retrieved result as the communication type of the translation source to the translation unit 140 in a manner such that the relevant communication type is associated with the identification information of the corresponding input and output unit 110a.

The communication type detection unit 130 further retrieves the communication type of the other input and output unit 110 (i.e., the input and output unit 110b) from the communication type storage unit 190 and outputs the retrieved result as the communication type of the translation destination to the translation unit 140 in a manner such that the relevant communication type is associated with the identification information of the corresponding input and output unit 110b.

On the other hand, if it is determined in step S121 that the operation input part 111b (specifically, the voice input part 113b) has obtained a message, the communication type detection unit 130 retrieves the communication type of the input and output unit 110b from the communication type storage unit 190 and outputs the retrieved result as the communication type of the translation source to the translation unit 140 in a manner such that the relevant communication type is associated with the identification information of the corresponding input and output unit 110b.

The communication type detection unit 130 further retrieves the communication type of the other input and output unit 110 (i.e., the input and output unit 110a) from the communication type storage unit 190 and outputs the retrieved result as the communication type of the translation destination to the translation unit 140 in a manner such that the relevant communication type is associated with the identification information of the corresponding input and output unit 110a.

Next, the translation unit 140 translates the message from one having the translation source communication type to one having the translation destination communication type and outputs the translated message to the input and output unit 110 as the translation destination (see step S123).

For example, it is assumed that the communication type identifying unit 120 identified (in step S114) Japanese and English as the communication types of the input and output units 110a and 110b and stored them in the communication type storage unit 190. In this case, when the input and output unit 110a (specifically, the voice input part 113a) has obtained a message, the translation unit 140 detects Japanese as the translation source communication type and also detects English as the translation destination communication type so that the translation unit 140 translates the message obtained by the input and output unit 110a from Japanese to English. The translation unit 140 then the obtained English message to the input and output unit 110b as the translation destination input and output unit 110.

Under a similar assumption, when the input and output unit 110b (specifically, the voice input part 113b) has obtained a message, the translation unit 140 detects English as the translation source communication type and also detects Japanese as the translation destination communication type so that the translation unit 140 translates the message obtained by the input and output unit 110b from English to Japanese. The translation unit 140 then outputs the obtained Japanese message to the input and output unit 110a as the translation destination input and output unit 110.

Next, the translation destination input and output unit 110 (specifically, the image display part 114) synthesizes the translated message with an obtained image output from the translation source input and output unit 110 (specifically, the imaging part 112) (see step S124).

For example, when the translation source input and output unit is the input and output unit 110a and the translation destination input and output unit is the input and output unit 110b, the input and output unit 110b (specifically, the image display part 114b) synthesizes the translated message (i.e., translated speech) as a text with an obtained image of the speaker output from the input and output unit 110a (specifically, the imaging part 112a).

Then the translation destination input and output unit 110 displays the synthesized image (see step S125).

Next, the form detection unit 150 acquires the form information that indicates whether or not the translation device 100 is in the open form (see step S126).

Based on the acquired information, the form detection unit 150 determines whether or not the translation device 100 is in the open form (see step S127).

If it is determined that the translation device 100 is in the open form (i.e., "YES" in step S127), the operation returns to step S115.

In contrast, if it is determined that the translation device 100 is not in the open form (i.e., "NO" in step S127), the form detection unit 150 stops the operation of the translation device 100 by, for example, shutting down a CPU provided in the translation device 100 to stop power supply from the power supply 210 to each unit of the translation device 100 (see step S131). After that, the operation returns to step S101.

As described above, the communication type of each input and output unit 110, which is identified by the communication type identifying unit 120, is utilized in both cases of when the input and output unit 110 functions as the translation source and when it functions as the translation destination.

Therefore, the user does not need to separately select the communication type utilized when the user issues a message and the communication type utilized to receive a translated message. Accordingly, the translation device 100 can translate messages having various communication types in accordance with the communication type currently utilized by the user while saving extra work of the user.

In addition, each input and output unit 110 outputs the translated message without interference with signals from the other input and output unit, so that the message can be more stably communicated to the user.

Additionally, when the translation device 100 is set up to have the predetermined form, the translation device 100 is activated. Therefore, the user can activate the translation device 100 only by setting up the translation device 100 to have the predetermined form, and thus no specific operation is required to the activation. Furthermore, the user can stop the translation device 100 only by changing the form of the translation device 100 from the predetermined form to another form, and thus no specific operation is required to terminate the operation.

The above predetermined form is a further open form than the 180-degree open form, and the translation device 100 operates in the predetermined form. Therefore, as shown in Fig. 4, the user can stably set up the translation device 100 and each user can easily detect a target screen for the user.

In addition, the image display part 114 displays each translated message as text (characters).

Accordingly, even when the user is hearing impaired or peripheral noise is large, the user can reliably understand the message.

The voice input part 113 acquires a speech as a message. Therefore, the speaker can input a message into the translation device by a simple work such as issuing the spoken message (i.e., speaking).

In addition to or instead of the message display as a text by the image display part 114, the voice output part 115 may output the translated message as a speech. In this case, even when the user is visually impaired or does not look at the display while taking notes or the like, the user can more reliably understand the message.

It is also possible that the translation device 100 selects an image or voice as a message output means. For example, in accordance with information set by the user, which is accepted by the operation input part 111, the communication type identifying unit 120 assigns, for each input and output unit 110, the communication type that employs any one of an image and voice to the relevant input and output unit 110.

Accordingly, if the conversation partner is hearing impaired or peripheral noise is large, the message can be output utilizing an image, so that the conversation partner can more reliably understand the message. In addition, if the conversation partner is visually impaired or is not looking at the display while taking notes or the like, the message can be output by voice, so that the conversation partner can more reliably understand the message.

It is also possible that the imaging part 112 obtains a user's image so that words utilizing gesture such as sign language may be obtained as a message. For example, the imaging part 112 outputs the obtained image to the translation unit 140, and the translation unit 140 subjects this image to pattern matching to detect a user's gesture as a message.

Accordingly, even when the user is vocally impaired, the user can input a message into the translation device.

When the translation device 100 shows the candidates for the communication type, an obtained user's image may be analyzed to narrow down the candidates of the communication type based on the appearance of the user.

For example, a table in which features, color of eyes, colors of hair, and the like are associated with candidates of language for translation is stored in the communication type identifying unit 120 in advance, and the candidates for the translation language are narrowed down utilizing the table. Then the image display part 114 displays the reduced candidates for the translation language, and the operation input part 111a accepts the user's selection operation.

Accordingly, the user can select the communication type from among the reduced candidates, so that the user can more easily find a desired communication type. On this point of view, the user can more simply designate a communication type.

The candidates for the communication type to be narrowed down in the translation device 100 (typically, by the communication type identifying unit 120) can be utilized in both cases of when the input and output unit 110 functions as the translation source and when it functions as the translation destination. Therefore, the translation device 100 does not need to separately narrow down the candidates for the communication type for the translation source and the translation destination, which can prevent an increase in a burden on the translation device 100 caused by the candidate narrowing operation.

When showing the candidates for the communication type, the translation device 100 may analyze an obtained user's image and narrow down the candidates for the communication type according to a movement shown in the image. For example, a table in which movements in a face such as a movement of lips, movements in a human body such as a movement of a hand, and the like are associated with candidates of language for translation is stored in the communication type identifying unit 120 in advance, and the candidates for the translation language are narrowed down utilizing the table so as to show the reduced candidates.

Accordingly, the user can select the communication type from among the reduced candidates, so that the user can more easily find a desired communication type. On this point of view, the user can more simply designate a communication type.

Also in this case, the candidates for the communication type to be narrowed down in the translation device 100 (typically, by the communication type identifying unit 120) can be utilized in common in both cases of when the input and output unit 110 functions as the translation source and when it functions as the translation destination. Therefore, the translation device 100 does not need to separately narrow down the candidates for the communication type for the translation source and the translation destination, which can save an increase in a burden on the translation device 100 caused by the candidate narrowing operation.

The translation device 100 may show the translated message on which a result of feeling analysis is reflected.

For example, a table in which pitches, intensities, and tones of user's (speaker's) voice, expressions, movements, visual lines, and gestures of the user, and the like, are associated with effects applied to characters (e.g. color or size of the characters) is stored in the translation unit 140 in advance. When obtaining a voice signal (user's speech) collected by the voice input part 113 or a user's image obtained by the imaging part 112, the translation device 100 analyzes the voice signal or the image so as to extract a feature of the voice or a feature of the user's expression or movement. The translation device 100 then retrieves an effect that matches the extracted feature, applies the retrieved effect to the text as a translated result, and outputs the text to the image display part 114 at the translation destination (e.g., the translation device 100 issues an instruction to display the text in a retrieved color).

Therefore, the translation device 100 can show a message in accordance with the speaker's representation, and thereby impact of the message as a translated result can be improved.

The translation device 100 may accept a correction for the translated result and learn thereof.

For example, when the voice input part 113 at the translation source obtains a voice signal (i.e., speech) and outputs it to the translation unit 140, the translation unit 140 subjects the voice signal to voice recognition so as to extract a message and translates the obtained message. In this process, the translation unit 140 generates candidates for the translated result (i.e., translated message). For example, the translation unit 140 translates the top three results of the voice recognition (i.e., candidates for the message) and selects the top three of obtained translated results. The translation unit 140 then outputs the generated candidates for the translated result to the input and output unit 110 at the translation source.

In the translation source input and output unit 110, the image display part 114 shows the candidates for the translated result, and the operation input part 111 accepts a user's (speaker's) operation of selecting the translated result to output information that indicates the selected candidate to the translation unit 140. Based on the relevant information, the translation unit 140 perform learning of the voice recognition method or translation method (e.g., control of parameters utilized in a voice recognition algorithm or a translation algorithm).

Such a process can improve the translation accuracy of the translation device 100.

Additionally, the input and output units 110 may utilize one microphone in common. In this case, the communication type detection unit 130 may identify the user (and the corresponding input and output unit) by means of the pitch or tone of the user's voice.

Therefore, the number of microphones provided in the translation device 100 can be reduced, which can make the structure of the translation device 100 simpler.

The translation device 100 may include three or more input and output units 110.

In this case, in step S123 of Fig. 6, the translation unit 140 outputs to each relevant input and output unit 110, a message translated according to the communication type assigned to the input and output unit 110. For example, if one of the translation destination input and output units 110 has a communication type of English and another translation destination has a communication type of German, the translation unit 140 translates a message obtained by the translation source input and output unit 110 to those in English and German and respectively outputs the English and German messages to the input and output unit 110 utilizing English and the input and output unit 110 utilizing German.

Accordingly, the translation device 100 can handle communications between three or more users.

The plurality of input and output units 110 may use one display screen. For example, ranges sectionalized on the display screen are assigned to the individual image display parts 114, and each image display part 114 displays a user's (e.g., speaker's) image or a text of the translated message in a region assigned to this image display part 114.

Accordingly, the number of the display screens provided in the translation device 100 can be reduced, which can make the structure of the translation device 100 simpler.

The form of the translation device 100 is not limited to the above-described form in which two bodies are combined in an openable and closable manner.

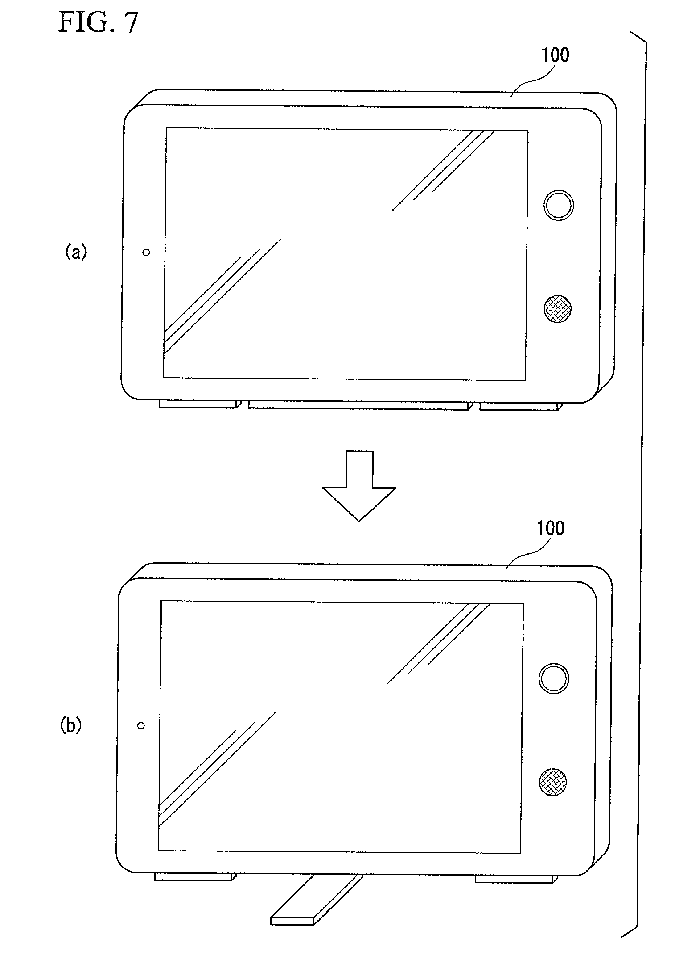

Fig. 7 is a perspective view that shows an example of the form of the translation device 100 in which two input and output units are provided on the front and back sides of a body, where part (a) shows a view observed from the front side of the translation device 100 when a leg of the translation device 100 is housed, and part (b) shows a view observed from the front side of the translation device 100 when the leg thereof is drawn and set. Similar to the front side, the back side of the translation device 100 also has a microphone of the voice input part 113, a speaker of the voice output part 115, a camera lens of the imaging part 112, a display screen of the image display part 114, and a touch sensor of the operation input part 111.

The above form shown in part (b) of Fig. 7 corresponds to the predetermined form. That is, the translation device 100 is activated when having a form in which its leg is open as shown in the part (b). In contrast, the operation of the translation device 100 is stopped when having a form in which the leg is closed as shown in part (a) of Fig. 7.

Therefore, the user can stably set up and use the translation device 100 by activating it in the open-leg state. Additionally, the user does not need to perform a specific operation to activate or stop the translation device 100 and can activate or stop it by a simple operation of opening or closing (or rotating) its leg to set up the translation device 100.

In addition, the translation device 100 does not need to have a foldable body, so that translation device 100 can have a simpler structure.

On the other hand, in a case in which the translation device 100 operates in a form in which the two bodies are open at an angle greater than 180 degrees as shown in Fig. 4, when the translation device 100 is set up at a position lower than the user's eyes, for example, on a desk, the display screen can be set to have a direction (i.e., angle in the vertical direction) by which the screen is more viewable to the user (more specifically, a direction by which the direction of the user's eyes is almost perpendicular to the display screen).

### Second embodiment

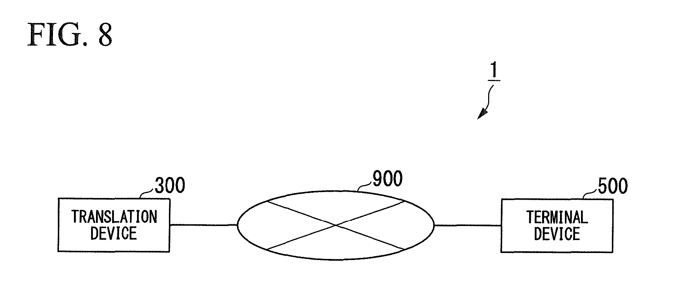

The translation device may communicate a message or the like with another device. This feature will be explained with reference to Figs. 8 to 10.

Fig. 8 is a diagram showing the general structure of a translation system as a second embodiment of the present invention. In Fig. 8, the translation system 1 has a translation device 300 and a terminal device 500.

Additionally, the translation device 300 and the terminal device 500 are each connected to a network 900.

The network 900 may be a mobile telephone network and mediates communication between the translation device 300 and the terminal device 500. However, the network 900 is not limited to the mobile telephone network and any means that can mediate communication between the translation device 300 and the terminal device 500 can be utilized. Specifically, various types of communication lines (e.g., LAN (local area network)) may be utilized as the network 900.

The terminal device 500 may be a cellular phone and obtains a message issued by a user of the terminal device 500, where there is another user who utilizes the translation device 300. The terminal device 500 sends the obtained message to the translation device 300 and also receives a translated message sent from the translation device 300 to output the translated message (e.g., display the message so as to show it to the user).

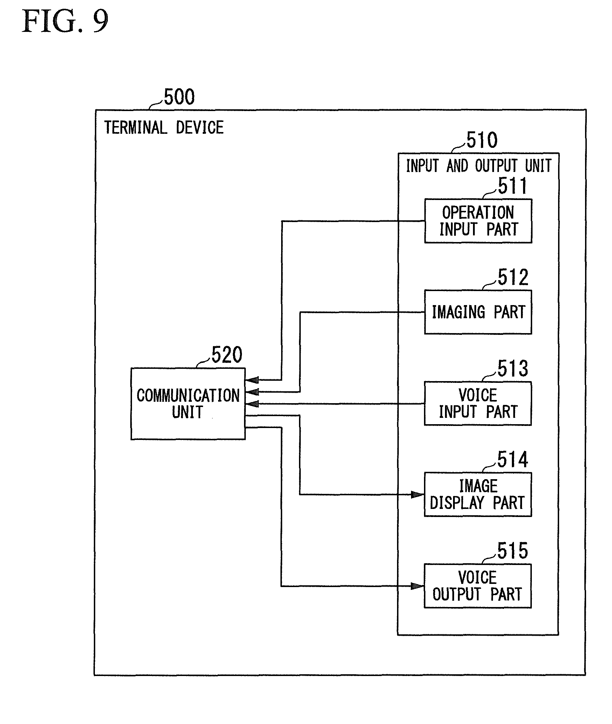

Fig. 9 is a general block diagram showing the functional structure of the terminal device 500. In Fig. 9, the terminal device 500 has an input and output unit 510 and a communication unit 520. The input and output unit 510 includes an operation input part 511, an imaging part 512, a voice input part 513, an image display part 514, and a voice output part 515.

The communication unit 520 communicates with the translation device 300 via the network 900 so as to send and receive various data items. In particular, the communication unit 520 sends a spoken message obtained by the voice input part 513 to the translation device 300 and receives a translated message sent as a text from the translation device 300 so as to output the translated message to the image display part 514. The communication unit 520 also sends information that indicates a user's operation accepted by the operation input part 511 and sends an image obtained by the imaging part 512 as image data to the translation device 300. The communication unit 520 also outputs image data, that is sent from the translation device 300, to the image display part 514 and outputs voice data, that is sent from the translation device 300, to the voice output part 515.

The input and output unit 510, the operation input part 511, the imaging part 512, the voice input part 513, the image display part 514, and the voice output part 515 are respectively similar to the input and output unit 110, the operation input part 111, the imaging part 112, the voice input part 113, the image display part 114, and the voice output part 115, and thus explanations thereof are omitted.

The voice input part 513 is an example of the input part of the present invention. That is, the voice input part 513 obtains a message spoken by a user and outputs the message to the communication unit 520.

In addition, the image display part 514 is an example of the output part of the present invention. That is, the image display part 514 displays (outputs) a translated message, which is received by the communication unit 520 from the translation device 300, on a display screen.

Similar to the translation device 100 of the first embodiment, the translation device 300 translates and shows (displays) each message communicated between users. In comparison with the translation device 100, the translation device 300 has a distinctive feature of communicating with the terminal device 500 so as to receive a message and send a translated message, or the like.

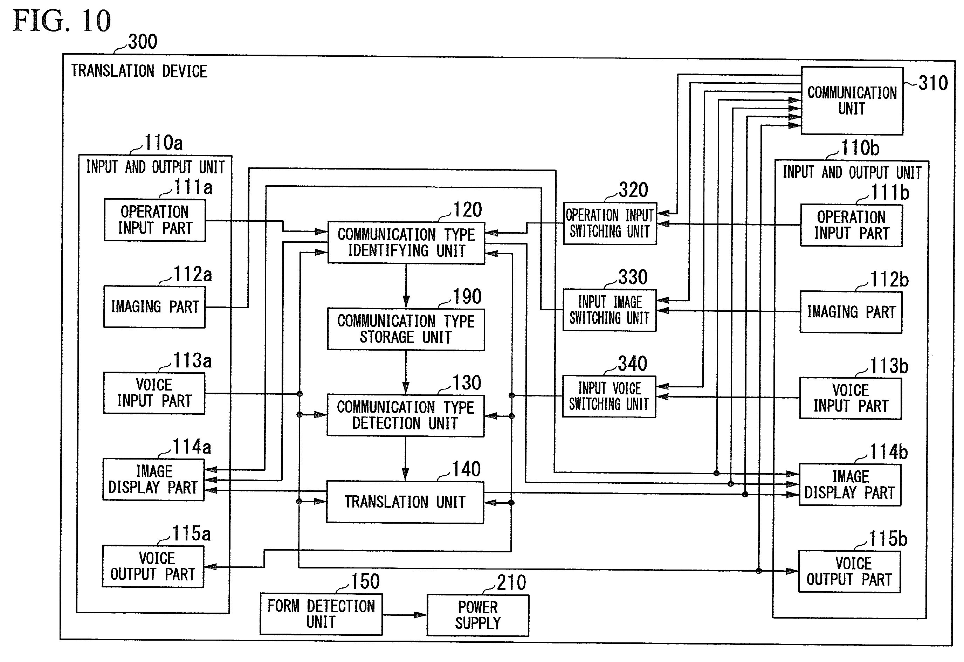

Fig. 10 is a general block diagram showing the functional structure of the translation device 300.

In Fig. 10, the translation device 300 has input and output units 110a and 110b, a communication type identifying unit 120, a communication type detection unit 130, a translation unit 140, a form detection unit 150, a communication type storage unit 190, a power supply 210, a communication unit 310, an operation input switching unit 320, an input image switching unit 330, and an input voice switching unit 340.

The input and output unit 110a includes an operation input part 111a, an imaging part 112a, a voice input part 113a, an image display part 114a, and a voice output part 115a.

The input and output unit 110b includes an operation input part 111b, an imaging part 112b, a voice input part 113b, an image display part 114b, and a voice output part 115b.

In Fig. 10, parts identical to those in Fig. 2 are given identical numeric reference numerals or signs (110a, 111a, 112a, 113a, 114a, 115a, 110b, 111b, 112b, 113b, 114b, 115b, 120, 130, 140, 150, 190, and 210) and explanations thereof are omitted.

The communication unit 310 communicates with the terminal device 500 via the network 900 to communicate various types of data.

For example, the communication unit 310 sends an image obtained by the imaging part 112a as image data to the terminal device 500 and sends a voice signal collected by the voice input part 113 as voice data to the terminal device 500. Additionally, the communication unit 310 sends candidates for the communication type, which are output from the communication type identifying unit 120, to the terminal device 500 and outputs to the terminal device 500, a designation of the communication type sent from the terminal device 500.

The communication unit 310 also receives information that indicates a user's operation, image data, and voice data and outputs them to the operation input switching unit 320, the input image switching unit 330, and the input voice switching unit 340 respectively.

The operation input switching unit 320, the input image switching unit 330, and the input voice switching unit 340 each perform switching between the operation input part 111b and the operation input part 511 in accordance with switching setting information that indicates which of the input and output unit 110b and the input and output unit 510 (see Fig. 9) is enabled.

If the input and output unit 110b is currently effective, the operation input switching unit 320 (i) outputs information, which is output from the operation input part 111b and indicates an user operation accepted by the operation input part 111b, to the communication type identifying unit 120 and (ii) abandons information, which is output from the communication unit 310 and indicates an user operation accepted by the operation input part 511 (i.e., disregards the relevant information).

If the input and output unit 510 is currently effective, the operation input switching unit 320 (i) outputs information, which is output from the communication unit 310 and indicates an user operation accepted by the operation input part 511, to the communication type identifying unit 120 and (ii) abandons information which is output from the operation input part 111b and indicates a user operation.

If the input and output unit 110b is currently effective, the input image switching unit 330 (i) outputs an image obtained by the imaging part 112b to the image display part 114a and (ii) abandons an image which is output from the communication unit 310 and obtained by the imaging part 512.

If the input and output unit 510 is currently effective, the input image switching unit 330 (i) outputs an image, which is output from the communication unit 310 and obtained by the imaging part 512, to the image display part 114a and (ii) abandons an image obtained by and output from the imaging part 112b.

If the input and output unit 110b is currently effective, the input voice switching unit 340 (i) outputs a voice signal collected by the voice input part 113b to the communication type identifying unit 120, the communication type detection unit 130, and the translation unit 140 and (ii) abandons a voice signal which is output from communication unit 310 and collected by the voice input part 513.

If the input and output unit 510 is currently effective, the input voice switching unit 340 (i) outputs a voice signal, which is output from communication unit 310 and collected by the voice input part 513, to the communication type identifying unit 120, the communication type detection unit 130, and the translation unit 140 and (ii) abandons a voice signal collected by the voice input part 113b.

The switching for determining which of the input and output unit 110b and the input and output unit 510 is enabled may be performed by the user.

For example, the image display part 114b displays a push button utilized to enable the input and output unit 110b. When the operation input part 111b detects a touch operation onto the push button, the operation input switching unit 320, the input image switching unit 330, and the input voice switching unit 340 enable the input and output unit 110b.

In addition, the image display part 514 displays a push button utilized to enable the input and output unit 510. When the operation input part 511 detects a touch operation onto the push button, the operation input switching unit 320, the input image switching unit 330, and the input voice switching unit 340 enable the input and output unit 510.

If both the touching operations onto the push button displayed by the image display part 114b and the image display part 514 are performed, the operation input switching unit 320, the input image switching unit 330, and the input voice switching unit 340 may perform the switching between the operation input part 111b and the operation input part 511 based on the operation performed later.

In another example, the translation system 1 may automatically perform the switching between the input and output unit 110b and the input and output unit 510.

For example, while the translation device 300 is active, the communication unit 310 always detects whether or not the communication with the terminal device 500 is effective. When the communication unit 310 has detected that the communication with the terminal device 500 is effective, the operation input switching unit 320, the input image switching unit 330, and the input voice switching unit 340 enable the input and output unit 510. When the communication unit 310 has detected that the communication with the terminal device 500 is not effective, the operation input switching unit 320, the input image switching unit 330, and the input voice switching unit 340 enable the input and output unit 150b.

The operation of the translation device 300 is similar to that of the translation device 100 in the first embodiment except for the switching operation between the input and output unit 110b and the input and output unit 510 performed by the translation device 300.

For example, the translation device 300 performs an operation as shown in Fig. 6, where after completing the activation in step S111, a setting process to enable any one of the input and output unit 110b and the input and output unit 510 is performed. In addition, before step S 115 to determine whether or not a message has been obtained, the translation device 300 determines whether or not an operation of switching between the input and output unit 110b and the input and output unit 510 has been performed. If it is determined that the switching operation has been performed, the switching setting is performed according to the relevant switching operation.

As described above, the translation device 300 obtains a message from the terminal device 500 and sends a translated message to the terminal device 500. Accordingly, the translation system 1 can be applied to communication with a partner in a distant place.

In addition, the translation system 1 can provide a service, similar to that provided by the translation device 100 to the user in the first embodiment, to the users of the translation device 300 and the terminal device 500. Therefore, various effects explained in the first embodiment can be obtained by the translation system 1.

For example, the communication type of the input and output unit 110 or the input and output unit 510, that is identified by the communication type identifying unit 120, is utilized in both cases when the input and output unit 110 or the input and output unit 510 functions as the translation source input and output unit or when it functions as the translation destination input and output unit.

Therefore, the user does not need to separately select the communication type utilized when the user issues a message and the communication type utilized to receive a translated message. Accordingly, the translation device 100 can translate messages having various communication types in accordance with the communication type currently utilized by the user while saving extra work of the user. On this point of view, the translation device 100 can translate messages having various communication types in accordance with the communication type currently utilized by the user while saving extra work of the user.

A program for executing all or part of the functions of the translation device 100 or 300 may be stored in a computer readable storage medium, and the program stored in the storage medium may be loaded and executed on a computer system, so as to perform the operation of each unit. Here, the computer system has hardware resources which include an OS and peripheral devices.

If the computer system employs a WWW system, the computer system can provide a homepage service (or viewable) environment.

The above computer readable storage medium is a storage device, for example, a portable medium such as a flexible disk, a magneto optical disk, a ROM, or a CD-ROM, or a memory device such as a hard disk built in a computer system.

The computer readable storage medium also covers (i) a device for dynamically storing the program for a short time, such as a communication line used when sending the program via a network (e.g., the Internet) or a communication line (e.g., a telephone line), (ii) or a device for temporarily storing the program, such as a volatile storage medium in a computer system which functions as a server or client for such a program transmission.

In addition, the program may execute a part of the above-explained functions, or may be a program by which the above-described functions can be executed by a combination program of this program and an existing program which has already been stored in the relevant computer system.

The embodiments of the present invention have been explained in detail with reference to the drawings. However, concrete structures are not limited to the embodiments and also include design modifications or the like, within the scope of the present invention.

### INDUSTRIAL APPLICABILITY

In accordance with the present invention, it is possible to translate messages having various communication types in accordance with a communication type currently utilized by a caller.

### Reference Symbols

- 1: translation system
- 100: translation device
- 110a, 110b, 510: input and output unit
- 111a, 111b, 511: operation input part
- 112a, 112b, 512: imaging part
- 113a, 113b, 513: voice input part
- 114a, 114b, 514: image display part
- 115a, 115b, 515: voice output part
- 120: communication type identifying unit
- 130: communication type detection unit
- 140: translation unit
- 150: form detection unit
- 190: communication type storage unit
- 210: power supply
- 310, 520: communication unit
- 320: operation input switching unit
- 330: input image switching unit
- 340: input voice switching unit
- 500: terminal device
- 900: network

## Claims

1. A translation device comprising:
a plurality of input and output units;
a communication type identifying unit that identifies, for each of the input and output units, a communication type utilized in the relevant input and output unit;
an input communication type detection unit wherein when any one of the input and output units has obtained a message, the input communication type detection unit detects the communication type identified for this input and output unit by the communication type identifying unit; and
a translation unit that translates the message from one having the communication type detected by the input communication type detection unit into one having at least one other communication type identified by the communication type identifying unit and outputs the translated message to the input and output unit associated with said at least one other communication type.

2. The translation device in accordance with claim 1, wherein the input and output units each output the translated message received from the translation unit in a manner such that the translated message does not interfere with any signal output from the other input and output units.

3. The translation device in accordance with claim 2, wherein:
the translation device has a variable form;
the translation device further comprises:
a form detection unit that detects a predetermined form of the translation device, in which the individual input and output units are arranged so that there is no interference between them; and
the translation device is activated when the form detection unit has detected the predetermined form.

4. The translation device in accordance with claim 2 or 3, wherein the individual input and output units directionally output the translated message in different directions so that there is no interference between the input and output units.

5. The translation device in accordance with claim 3, wherein:
the form of the translation device is variable to the predetermined form in which a surface on which a first one of the input and output units is arranged and another surface on which a second one of the input and output units is arranged do not face each other and are directed in different directions; and
the first and second input and output units in the predetermined form have directionality by which signals from them do not interfere with each other.

6. The translation device in accordance with any one of claims 1 to 5, wherein each input and output unit has an image display part and displays the translated message utilizing characters.

7. The translation device in accordance with any one of claims 1 to 6, wherein each input and output unit has a voice output part and outputs the translated message by voice.

8. The translation device in accordance with any one of claims 1 to 5, wherein:
each input and output unit has an image display part and a voice output part; and
the communication type identifying unit selects, for each of the input and output units, a communication type utilizing any one of image or voice as the communication type utilized in the relevant input and output unit.

9. The translation device in accordance with any one of claims 1 to 8, wherein each input and output unit has a voice input part to acquire a speech by voice as the message.

10. The translation device in accordance with any one of claims 1 to 8, wherein each input and output unit has an imaging part to obtain words utilizing gesture as the message.

11. A translation system comprising a translation device and a terminal device, wherein:
the terminal device comprises:
an input unit that obtains a message;
a communication unit that sends the message obtained by the input unit to the translation device and receives a translated message sent from the translation device; and
an output unit that outputs the translated message received by the communication unit,
wherein the input unit and the output unit form an input and output unit;
the translation device comprises:
a communication unit that communicates with the terminal device;
a plurality of input and output units;
a communication type identifying unit that identifies, for each currently effective unit among the input and output units of the translation device and the terminal device, a communication type utilized in the relevant input and output unit;
an input communication type detection unit wherein when any one of the currently effective input and output units has obtained a message, the input communication type detection unit detects the communication type identified for this input and output unit by the communication type identifying unit; and
a translation unit that translates the message from one having the communication type detected by the input communication type detection unit into one having at least one other communication type identified by the communication type identifying unit and outputs the translated message to the input and output unit associated with said at least one other communication type.

12. A translation method utilized in a translation device that has a plurality of input and output units, the method comprising:
a communication type identifying step that identifies, for each of the input and output units, a communication type utilized in the relevant input and output unit;
an input communication type detection step wherein when any one of the input and output units has obtained a message, the input communication type detection step detects the communication type identified for this input and output unit by the communication type identifying step; and
a translation step that translates the message from one having the communication type detected by the input communication type detection step into one having at least one other communication type identified by the communication type identifying step and outputs the translated message to the input and output unit associated with said at least one other communication type.

13. A program that makes a computer as a translation device, that has a plurality of input and output units, execute:
a communication type identifying step that identifies, for each of the input and output units, a communication type utilized in the relevant input and output unit;
an input communication type detection step wherein when any one of the input and output units has obtained a message, the input communication type detection step detects the communication type identified for this input and output unit by the communication type identifying step; and
a translation step that translates the message from one having the communication type detected by the input communication type detection step into one having at least one other communication type identified by the communication type identifying step and outputs the translated message to the input and output unit associated with said at least one other communication type.
